# EUROPEAN PATENT APPLICATION

(11) **EP 4 779 397 A1**
(43) Date of publication of application: **22.07.2026**
(21) Application number: 24865165.5
(22) Date of filing: 16.08.2024
(51) Int. Cl.: G02F 1/1339, G02F 1/13, G02F 1/1333, G02F 1/1334

(54) **LIGHT CONTROL DEVICE AND METHOD FOR MANUFACTURING LIGHT CONTROL DEVICE**

(30) Priority: 15.09.2023 JP 2023150417
(71) Applicant: Toppan Holdings Inc., Tokyo 110-0016 (JP)
(72) Inventor: YAMAKAWA Masaya, Tokyo 110-0016 (JP)
(74) Representative: TBK
(86) International application number: PCT/JP2024/029182
(87) International publication number: WO 2025/057659

(57) **Abstract**

A light control device includes a transparent substrate; a light control sheet that includes a light control layer containing a transparent resin layer with multiple voids defined therein and a liquid crystal composition filled in the voids, the light control layer being sandwiched between a first electrode film and a second electrode film, the first electrode film having a bonding surface facing the transparent substrate; an adhesive layer that bonds the bonding surface to the transparent substrate; and a sealing part that is disposed in a first gap between an edge portion of the bonding surface and the transparent substrate, and covers an edge surface of the first electrode film and an edge surface of the light control layer. The sealing part has a thickness separating an edge portion of the adhesive layer from the transparent substrate, and is disposed in a second gap between the edge portion of the adhesive layer and the transparent substrate.

## Description

### [Technical Field]

The present disclosure relates to light control devices and methods of producing a light control device.

### [Background Art]

An example light control sheet includes a first transparent conductive film, a second transparent conductive film, and a light control layer sandwiched between the first and second transparent conductive films. Each transparent conductive film includes a substrate and a transparent electrode supported by the substrate. A portion of the transparent electrode of the first transparent conductive film is exposed from the second transparent conductive film and the light control layer. A portion of the transparent electrode of the second transparent conductive film is exposed from the first transparent conductive film and the light control layer. The light control sheet includes a sealing part covering the exposed portion of the transparent electrode of the first transparent conductive film, an edge surface of the light control layer, and an edge surface of the second transparent conductive film. The light control sheet includes a sealing part covering the exposed portion of the transparent electrode of the second transparent conductive film, an edge surface of the light control layer, and an edge surface of the first transparent conductive film (e.g., see PTL 1).

### [Citation List]

### [Patent Literature]

PTL 1: JP202021016A

### [Summary of the Invention]

### [Technical Problem]

A portion of the sealing part covering the edge surface of the first transparent conductive film is also located on a portion of the surface of the first transparent conductive film facing away from the light control layer, the portion continuing from the edge surface. For example, if the surface of the first transparent conductive film is bonded to a support member via an adhesive layer, a portion of an edge of the adhesive layer facing the sealing part may peel away from the support member due to the height of the sealing part on the surface of the first transparent conductive film being larger than the thickness of the adhesive layer. The lower the height of the sealing part on the surface of the first transparent conductive film, the smaller the amount of peeling of the adhesive layer can be. However, the smaller the height of the sealing part, the smaller the thickness of the sealing part in a plane parallel to the surface of the first transparent conductive film in a direction protruding from the edge surface of the first transparent conductive film. Thus, the function of the sealing part to seal the first transparent conductive film is reduced accordingly.

### [Solution to Problems]

In an aspect, a light control device includes a transparent substrate; a light control sheet that includes a light control layer containing a transparent resin layer with multiple voids defined therein and a liquid crystal composition filled in the voids, the light control layer being sandwiched between a first electrode film and a second electrode film, the first electrode film having a bonding surface facing the transparent substrate; an adhesive layer that bonds the bonding surface to the transparent substrate; and a sealing part that is disposed in a gap between an edge portion of the bonding surface and the transparent substrate, and covers an edge surface of the first electrode film and an edge surface of the light control layer. The sealing part has a thickness separating an edge portion of the adhesive layer from the transparent substrate, and is disposed in a gap between the edge portion of the adhesive layer and the transparent substrate.

In an aspect, a method of producing a light control device is a method of producing a light control device that includes a transparent substrate; a light control sheet that includes a light control layer containing a transparent resin layer with multiple voids defined therein and a liquid crystal composition filled in the voids, the light control layer being sandwiched between a first electrode film and a second electrode film, the first electrode film having a bonding surface facing the transparent substrate; and an adhesive layer that bonds the bonding surface to the transparent substrate.

The light control sheet includes a first sealing element that covers an edge surface of the first electrode film and an edge surface of the light control layer, and has a height from the bonding surface larger than a thickness of the adhesive layer. The production method includes separating an edge portion of the adhesive layer from the transparent substrate by bonding the light control sheet to the transparent substrate via the adhesive layer so that the first sealing element is brought into contact with the transparent substrate, filling an ionizing radiation curable resin in a gap between the edge portion of the adhesive layer and the transparent substrate and a gap between the adhesive layer and the first sealing element, and curing the ionizing radiation curable resin by applying ionizing radiation to the ionizing radiation curable resin to form a sealing part constituted of the first sealing element and the ionizing radiation curable resin.

### [Brief Description of the Drawings]

Fig. 1 is a plan view illustrating a structure of a light control device as seen from a perspective perpendicular to the plane on which the light control device extends.
Fig. 2 is a cross-sectional view illustrating a structure of the light control device taken along the line II-II of Fig. 1.
Fig. 3 is a diagram illustrating a process in a method of producing a light control device.
Fig. 4 is a diagram illustrating a process in a method of producing a light control device.
Fig. 5 is a diagram illustrating a process in a method of producing a light control device.
Fig. 6 is a diagram illustrating a process in a method of producing a light control device.

### [Description of the Embodiments]

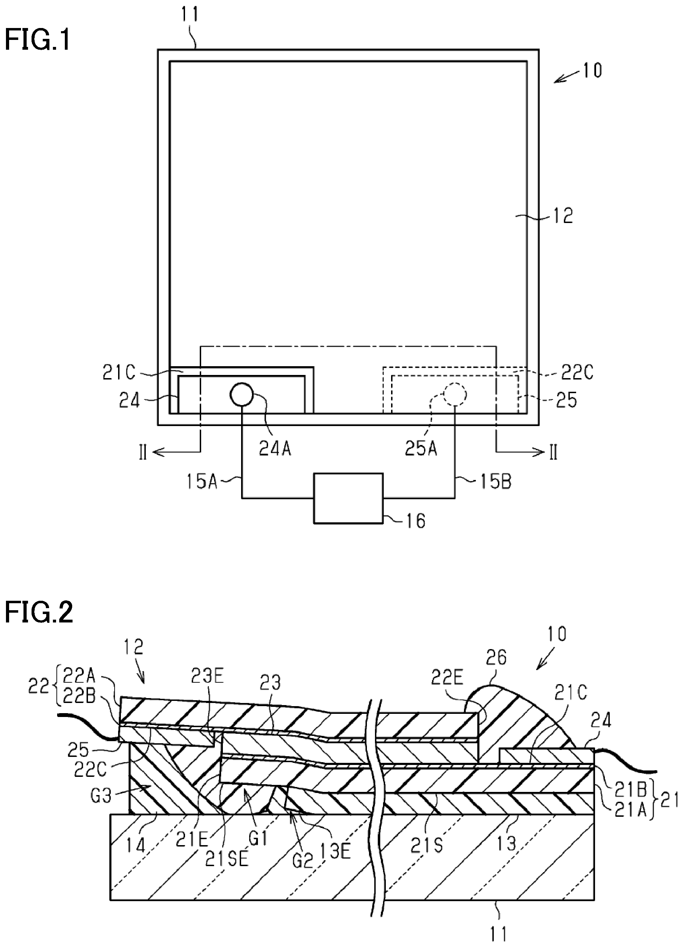

Referring to Figs. 1 to 6, an embodiment of a light control device and a method of producing a light control device will be described.

### [Light control device]

Referring to Figs. 1 and 2, a light control device will be described Fig. 1 shows a planar structure of a light control device as seen from a perspective perpendicular to the plane on which the light control device extends. For the sake of convenience, Fig. 1 omits a sealing part included in the light control device.

As shown in Fig. 1, a light control device 10 includes a transparent substrate 11 and a light control sheet 12. The light control sheet 12 is supported by the transparent substrate 11. The transparent substrate 11 and the light control sheet 12 each have a plate-like shape. In the example shown in Fig. 1, the transparent substrate 11 and the light control sheet 12 each has a rectangular shape. As seen from a perspective perpendicular to the plane on which the transparent substrate 11 extends, the transparent substrate 11 is larger than the light control sheet 12, and the light control sheet 12 is located inside the transparent substrate 11.

The type of the light control sheet 12 may be, for example, a normal type. A normal type light control sheet 12 has high haze in the state in which no voltage is applied to the light control sheet 12, and has lower haze in the state in which a voltage is applied to the light control sheet 12, compared to the case where no voltage is applied to the light control sheet 12.

The light control sheet 12 includes a first electrode part 21C exposed to the outside, and a second electrode part 22C located between the light control sheet 12 and the transparent substrate 11. The first electrode part 21C is connected to a first electrode terminal 24. The second electrode part 22C is connected to a second electrode terminal 25. The first electrode terminal 24 is connected to a first wiring 15A by a solder 24A. The second electrode terminal 25 is connected to a second wiring 15B by a solder 25A. The wirings 15A and 15B are connected to a drive part 16 that applies a voltage to the light control sheet 12.

Fig. 2 shows a cross-sectional structure of the light control device 10 taken along the line II-II of Fig. 1.

As shown in Fig. 2, the light control device 10 further includes an adhesive layer 13 and a sealing part 14. The adhesive layer 13 and the sealing part 14 are transparent. The light control sheet 12 includes a first electrode film 21, a second electrode film 22, and a light control layer 23. The light control layer 23 includes a transparent resin layer defining multiple voids therein, and a liquid crystal composition filled in the voids. The light control layer 23 is sandwiched between the first electrode film 21 and the second electrode film 22. The light control sheet 12 has a bonding surface 21S, as a surface of the first electrode film 21, facing the transparent substrate 11.

The first electrode film 21 includes a first base material 21A and a first electrode layer 21B. The first base material 21A and the first electrode layer 21B are both transparent. The first base material 21A supports the first electrode layer 21B. The second electrode film 22 includes a second base material 22A and a second electrode layer 22B. The second base material 22A and the second electrode layer 22B are both transparent. The second base material 22A supports the second electrode layer 22B. In the thickness direction of the light control sheet 12, the first electrode layer 21B and the second electrode layer 22B face each other with the light control layer 23 sandwiched therebetween.

The adhesive layer 13 bonds the bonding surface 21S to the transparent substrate 11. The adhesive layer 13 is located between the transparent substrate 11 and the bonding surface 21S and in contact with them to thereby bond the bonding surface 21S to the transparent substrate 11.

The sealing part 14 is disposed in a first gap G1 that is a gap between an edge portion 21SE of the bonding surface 21S and the transparent substrate 11, and covers an edge surface 21E of the first electrode film 21 and an edge surface 23E of the light control layer 23. The edge portion 21SE of the bonding surface 21S has a shape of a closed loop along the outer edge of the first electrode film 21, as seen from a perspective perpendicular to the bonding surface 21S. The edge portion 21SE of the bonding surface 21S has a width extending from the outer edge of the first electrode film 21 into the bonding surface 21S, as seen from a perspective perpendicular to the bonding surface 21S. The first gap G1 is a space located between the edge portion 21SE of the bonding surface 21S and the surface of the transparent substrate 11 facing the bonding surface 21S.

The edge surface 21E of the first electrode film 21 is a surface connecting between the bonding surface 21S and the surface facing away from the bonding surface 21S in the thickness direction of the first electrode film 21. The edge surface 21E has a shape of a closed loop along the outer edge of the first electrode film 21. The edge surface 21E includes an edge surface of the first base material 21A and an edge surface of the first electrode layer 21B. The edge surface of the first base material 21A is a surface connecting between the two surfaces of the first base material 21A in the thickness direction of the light control sheet 12. The edge surface of the first electrode layer 21B is a surface connecting between the two surfaces of the first electrode layer 21B in the thickness direction of the light control sheet 12. The edge surface 23E of the light control layer 23 is a surface connecting between the two surfaces of the light control layer 23 in the thickness direction of the light control layer 23. The edge surface 23E has a shape of a closed loop along the outer edge of the light control layer 23.

The sealing part 14 has a thickness separating an edge portion 13E of the adhesive layer 13 from the transparent substrate 11, and is disposed in a second gap G2 that is a gap between the edge portion 13E of the adhesive layer 13 and the transparent substrate 11. In the distance between the transparent substrate 11 in which the surface thereof contacts the adhesive layer 13 and the second electrode layer 22B, the thickness of the sealing part 14 may correspond to the distance between the transparent substrate 11 and the bonding surface 21S at a thickest part of the sealing part 14. The edge portion 13E of the adhesive layer 13 includes the outer edge of the adhesive layer 13, and has a shape of a closed loop along the outer edge as seen from a perspective perpendicular to the plane on which the adhesive layer 13 extends. The edge portion 13E of the adhesive layer 13 has a width extending from the outer edge of the adhesive layer 13 into the adhesive layer 13, as seen from a perspective perpendicular to the plane on which the adhesive layer 13 extends, and has a thickness equal to that of the adhesive layer 13. The second gap G2 is a space located between the surface of the transparent substrate 11 facing the adhesive layer 13 and the surface of the adhesive layer 13 facing the transparent substrate 11.

According to the light control device 10 of the present disclosure, the sealing part 14 is thick enough to separate the edge portion 13E of the adhesive layer 13 from the transparent substrate 11, and therefore the sealing part 14 can ensure the function of sealing the edge surface 21E of the first electrode film 21 and the edge surface 23E of the light control layer 23. Furthermore, since the sealing part 14 is disposed in the second gap G2 between the edge portion 13E of the adhesive layer 13 and the transparent substrate 11, the second gap G2 is suppressed from being visible via the transparent substrate 11. Thus, the light control device 10 can achieve both the sealing function of the sealing part 14 and the aesthetic appearance of the light control sheet 12 when bonding the light control sheet 12 to the transparent substrate 11.

From the perspective of suppressing lifting of the adhesive layer 13 due to the sealing part 14, the thickness of the sealing part 14 is preferred to be small. However, the smaller the thickness of the sealing part 14, the lower the function of the sealing part 14 to seal the light control layer 23. Thus, for example, moisture and heat resistance of the light control sheet 12 may be reduced. In this regard, as in the present disclosure, since the sealing part 14 is thick enough to separate the edge portion 13E of the adhesive layer 13 from the transparent substrate 11, sealing function of the sealing part 14 can be sufficiently ensured.

From the perspective of reducing the thickness of the light control device 10, the thickness of the adhesive layer 13 is preferred to be small. The adhesive layer 13 will have predetermined optical properties, weather resistance, and adhesion reliability when it has a predetermined thickness, and therefore it will not be easy to change the thickness of the adhesive layer 13 depending on the thickness of the sealing part 14 so that the edge portion 13E of the adhesive layer 13 does not separate from the transparent substrate 11.

The second electrode film 22 includes the second electrode part 22C exposed from the light control layer 23 and the first electrode film 21. The sealing part 14 may be disposed in a third gap G3 that is a gap between the second electrode part 22C and the transparent substrate 11. The second electrode part 22C corresponds to an area that is not covered by the light control layer 23 and the first electrode film 21 in the second electrode film 22. The second electrode part 22C has electrical conductivity. The third gap G3 is a space located between the surface of the second electrode part 22C facing the transparent substrate 11 and the surface of the transparent substrate 11 facing the second electrode part 22C. Since the sealing part 14 seals not only the edge surface 21E of the first electrode film 21 and the edge surface 23E of the light control layer 23 but also the second electrode part 22C, sealing function of the sealing part 14 will be enhanced.

In the example shown in Fig. 2, the light control sheet 12 further includes the second electrode terminal 25 connected to the second electrode part 22C of the second electrode film 22. The sealing part 14 may cover the second electrode terminal 25 and a portion of the second electrode part 22C exposed from the second electrode terminal 25. Since the sealing part 14 seals not only the edge surface 21E of the first electrode film 21 and the edge surface 23E of the light control layer 23 but also the second electrode terminal 25, sealing function of the sealing part 14 will be enhanced.

The first electrode film 21 includes the first electrode part 21C exposed from the second electrode film 22 and the light control layer 23. The first electrode part 21C corresponds to an area that is not covered by the light control layer 23 and the second electrode film 22 in the first electrode film 21. The first electrode part 21C has electrical conductivity. The light control sheet 12 may further include the first electrode terminal 24 connected to the first electrode part 21C of the first electrode film 21.

The light control sheet 12 may include a sealing part 26. The sealing part 26 covers the first electrode terminal 24, a portion of the first electrode part 21C exposed from the first electrode terminal 24, an edge surface 22E of the second electrode film 22, and a portion of the edge surface 23E of the light control layer 23 that is different from the portion covered by the sealing part 14.

The edge surface 22E of the second electrode film 22 is a surface connecting between the two surfaces of the second electrode film 22 in the thickness direction of the second electrode film 22. The edge surface 22E has a shape of a closed loop along the outer edge of the second electrode film 22. The edge surface 22E includes an edge surface of the second base material 22A and an edge surface of the second electrode layer 22B. The edge surface of the second base material 22A is a surface connecting between the two surfaces of the second base material 22A in the thickness direction of the second base material 22A. The edge surface of the second electrode layer 22B is a surface connecting between the two surfaces of the second electrode layer 22B in the thickness direction of the second electrode layer 22B.

### [Method of producing light control device]

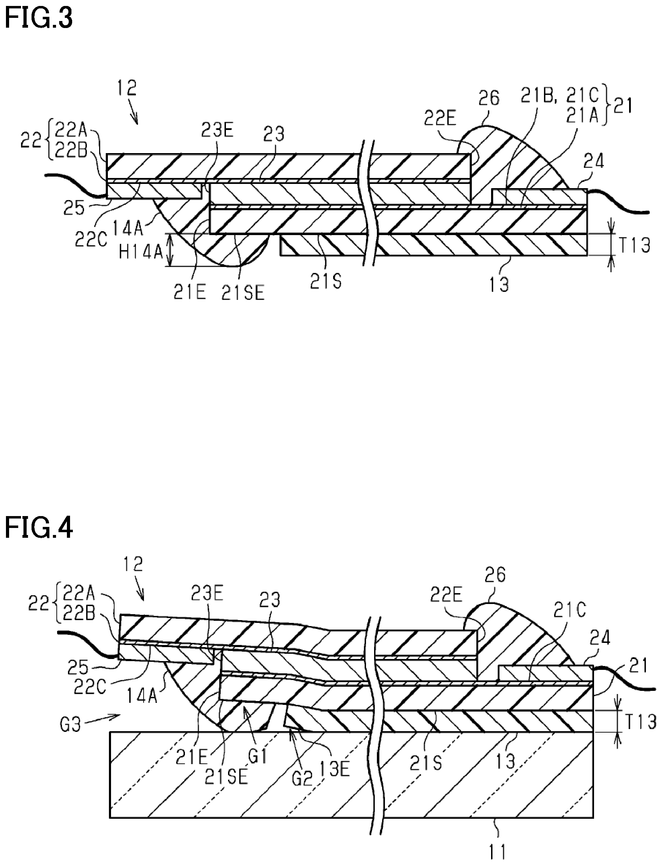

Referring to Figs. 3 to 6, a method of producing the light control device will be described.

The method of producing the light control device 10 includes separating the edge portion 13E of the adhesive layer 13 from the transparent substrate 11, filling an ionizing radiation curable resin, and forming the sealing part 14 from a first sealing element and the ionizing radiation curable resin. When separating the edge portion 13E of the adhesive layer 13 from the transparent substrate 11, the light control sheet 12 is bonded to the transparent substrate 11 via the adhesive layer 13 so that the first sealing element of the light control sheet 12 is brought into contact with the transparent substrate 11. When filling the ionizing radiation curable resin, the ionizing radiation curable resin is filled in a gap between the edge portion 13E of the adhesive layer 13 and the transparent substrate 11, and a gap between the adhesive layer 13 and the first sealing element. When forming the sealing part 14, the ionizing radiation curable resin is cured by applying ionizing radiation to the ionizing radiation curable resin.

According to the method of producing the light control device 10, since the first sealing element has a thickness that can separate the edge portion 13E of the adhesive layer 13 from the transparent substrate 11, the first sealing element can ensure the function of sealing the edge surface 21E of the first electrode film 21 and the edge surface 23E of the light control layer 23. Furthermore, since the ionizing radiation curable resin filled in the gap between the edge portion 13E of the adhesive layer 13 and the transparent substrate 11 and the gap between the adhesive layer 13 and the first sealing element forms the sealing part 14 together with the first sealing element, the gaps between the transparent substrate 11 and the light control sheet 12 can be suppressed from being visible via the transparent substrate 11. Thus, the method of producing the light control device 10 can achieve both the sealing function of the sealing part 14 and the aesthetic appearance of the light control sheet 12 when bonding the light control sheet 12 to the transparent substrate 11. With reference to the drawings, the method of producing the light control device 10 will be described in more detail.

Fig. 3 shows a cross-sectional structure of the light control sheet 12 before being bonded to the transparent substrate 11. Fig. 3 shows a cross-sectional structure of the light control sheet 12 together with a cross-sectional structure of the adhesive layer 13, corresponding to the cross-sectional structure taken along the line **II-II** of Fig. 1.

As shown in Fig. 3, similarly to the light control sheet 12 after bonding described above, the light control sheet 12 before bonding includes the first electrode film 21, the second electrode film 22, and the light control layer 23. The first electrode film 21 includes the first electrode part 21C exposed from the second electrode film 22 and the light control layer 23. The first electrode part 21C is connected to a first electrode terminal 24. The second electrode film 22 includes the second electrode part 22C exposed from the first electrode film 21 and the light control layer 23. The second electrode part 22C is connected to the second electrode terminal 25. The light control sheet 12 includes the sealing part 26 covering the first electrode part 21C, the edge surface 22E of the second electrode film 22, and the edge surface 23E of the light control layer 23.

The light control sheet 12 further includes a first sealing element 14A The first sealing element 14A covers the edge portion 21SE of the bonding surface 21S, the edge surface 21E of the first electrode film 21, the edge surface 23E of the light control layer 23, and the second electrode part 22C. In the light control sheet 12, the first sealing element 14A covers a corner portion formed by the bonding surface 21S and the edge surface 21E of the first electrode film 21. Therefore, the thickness of the first sealing element 14A, i.e., the thickness of the first sealing element 14A extending outward from the outer edge of the first electrode film 21 along the plane parallel to the bonding surface 21S, tends to be thin. The thickness of the first sealing element 14A tends to increase as the amount of protrusion of the first sealing element 14A increases in the direction away from the bonding surface 21S, and tends to decrease as the amount of protrusion decreases. As the amount of protrusion of the first sealing element 14A decreases, the function of the first sealing element 14A to seal the edge surface 21E of the first electrode film 21 and the edge surface 23E of the light control layer 23 decreases.

For this reason, the amount of protrusion of the first sealing element 14A in the direction away from the bonding surface 21S, i.e., a height H14A of the first sealing element 14A on the bonding surface 21S, is set to be larger than a thickness T13 of the adhesive layer 13.

The adhesive layer 13 is bonded to the bonding surface 21S of the first electrode film 21 before the light control sheet 12 is bonded to the transparent substrate 11.

Fig. 4 shows a state in which the adhesive layer 13 bonded to the bonding surface 21S has been bonded to the transparent substrate 11.

As shown in Fig. 4, the adhesive layer 13 is bonded to the transparent substrate 11. As described above, since the height H14A of the first sealing element 14A on the bonding surface 21S is larger than the thickness of the adhesive layer 13, the top of the first sealing element 14A is brought into contact with the transparent substrate 11 while the adhesive layer 13 is brought into contact with the transparent substrate 11. Thus, the edge portion 13E of the adhesive layer 13 facing the first sealing element 14A lifts up from the transparent substrate 11 according to the difference between the height H14A of the first sealing element 14A and the thickness T13 of the adhesive layer 13. Thus, the second gap G2 is formed between the edge portion 13E of the adhesive layer 13 and the transparent substrate 11. The size of the second gap G2 tends to increase as the difference between the height H14A of the first sealing element 14A and the thickness T13 of the adhesive layer 13 increases, and tends to decrease as the difference therebetween decreases.

As described above, since the height H14A of the first sealing element 14A on the bonding surface 21S is larger than the thickness of the adhesive layer 13, the edge portion 13E of the adhesive layer 13 lifts up from the transparent substrate 11 in the vicinity of the first sealing element 14A. On the other hand, the effect of the height H14A of first sealing element 14A on the adhesive layer 13 is reduced as the adhesive layer 13 is away from the first sealing element 14A, and therefore the portion of the adhesive layer 13 away from edge portion 13E adheres closely to the transparent substrate 11. Therefore, in a cross section taken along the line **II-II,** i.e., in a cross section perpendicular to the plane on which the transparent substrate extends, the second electrode film 22 is not flat.

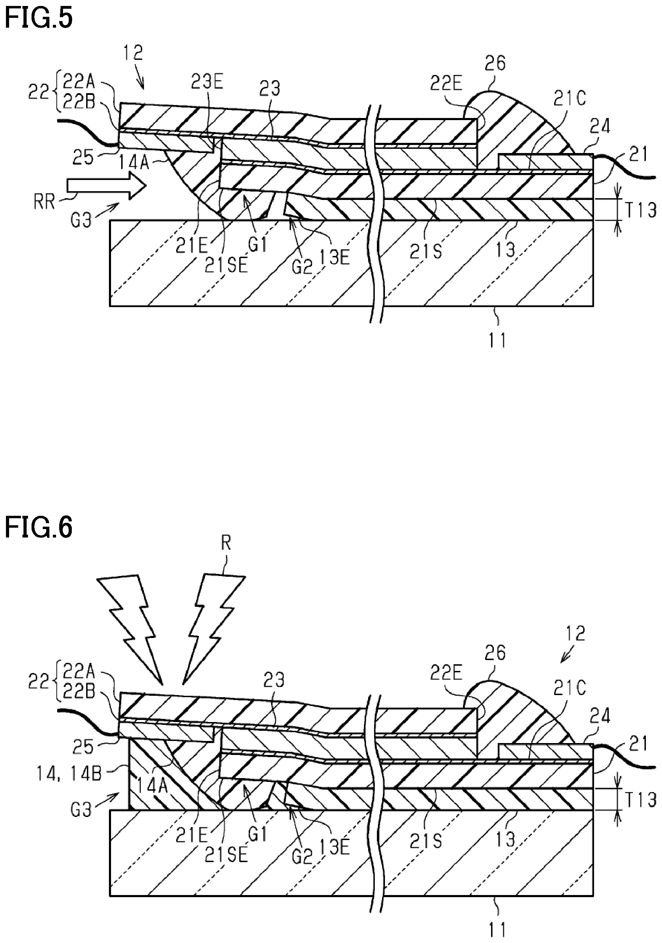

As shown in Fig. 5, an ionizing radiation curable resin RR is filled in between the transparent substrate 11 and the second electrode film 22. The ionizing radiation curable resin RR is transparent. In this case, the ionizing radiation curable resin RR is filled in between the first sealing element 14A and the transparent substrate 11 on the opposite side to the adhesive layer 13 with respect to the first sealing element 14A. The ionizing radiation curable resin RR is filled in between the transparent substrate 11 and the second electrode film 22 so that the third and second gaps G3 and G2 are filled in from the opposite side to the adhesive layer 13 with respect to the first sealing element 14A. Thus, the space where the first sealing element 14A is not located in the space between the transparent substrate 11 and the second electrode film 22 is filled with the ionizing radiation curable resin RR.

Thus, in the sealing part 14 formed due to curing of the ionizing radiation curable resin RR, the sealing part 14 is further thickened in the direction protruding from the edge surface 21E of the first electrode film 21 in the plane on which the first electrode film 21 extends. Thus, the function of the sealing part 14 to seal the light control sheet 12 is further enhanced.

The ionizing radiation for curing the ionizing radiation curable resin RR may be UV light or may be electron beams. The ionizing radiation curable resin RR may be a UV curable resin or may be an electron beam curable resin.

As shown in Fig. 6, ionizing radiation R is applied to the ionizing radiation curable resin RR filled in between the transparent substrate 11 and the second electrode film 22. Thus, a second sealing element 14B, i.e., a cured product of the ionizing radiation curable resin RR, is formed. Consequently, the sealing part 14 constituted of the first and second sealing elements 14A and 14B is formed.

The first sealing element 14A is made of a transparent synthetic resin. The first sealing element 14A preferably has a refractive index equal to that of the second sealing element 14B. Thus, the boundary between the first and second sealing elements 14A and 14B can be suppressed from being visible. The first sealing element 14A may be made of the ionizing radiation curable resin RR. The ionizing radiation curable resin RR forming the first sealing element 14A is preferably the ionizing radiation curable resin forming the second sealing element 14B. Thus, the boundary between the first and second sealing elements 14A and 14B is suppressed from being visible, and adhesion of the second sealing element 14B to the first sealing element 14A is enhanced.

In Figs. 2 to 6, the first sealing element 14A is shown with clear distinction from the second sealing element 14B. However, if the first and second sealing elements 14A and 14B have the same refractive index and are made of the same material, they are recognized as a single cured body.

### [Materials]

In the light control sheet 12, the base materials 21A and 22A of the respective electrode films 21 and 22 may be made of a synthetic resin or an inorganic compound. Examples of the synthetic resin include polyester-based resins, polyacrylate-based resins, polycarbonate-based resins, and polyolefin-based resins. Examples of the polyester-based resins include polyethylene terephthalate and polyethylene naphthalate. Examples of the polyacrylate-based resins include polymethylmethacrylate. Examples of the inorganic compound include silicon dioxide, silicon oxynitride, and silicon nitride.

The electrode layers 21B and 22B included in the electrode films 21 and 22 may be made, for example, of any one material selected from the group consisting of indium tin oxide, fluorine-doped tin oxide, tin oxide, zinc oxide, carbon nanotubes, silver-based alloy, and poly(3,4-ethylenedioxythiophene).

The liquid crystal composition contains a liquid crystal compound. The liquid crystal composition may contain a dichroic dye, or may contain additives such as an antifoaming agent, antioxidant, weatherproofing agent, solvent, and viscosity reducer. The weatherproofing agent may be a UV absorber or light stabilizer.

A normal type light control sheet may contain, for example, a liquid crystal compound with positive dielectric anisotropy. Examples of the liquid crystal compound include at least one selected from the group consisting of Schiff base compounds, azo compounds, azoxy compounds, biphenyl compounds, terphenyl compounds, benzoic acid ester compounds, tolan compounds, pyrimidine compounds, pyridazine compounds, cyclohexanecarboxylic acid ester compounds, phenylcyclohexane compounds, biphenylcyclohexane compounds, dicyanobenzene compounds, naphthalene compounds, and dioxane compounds. The liquid crystal compound may be a single liquid crystal compound or may be a combination of two or more liquid crystal compounds.

The transparent resin layer is a cured product of a photopolymerizable composition. The light for polymerizing the photopolymerizable composition may be UV light or electron beams. The photopolymerizable composition may be a UV-polymerizable composition or an electron beam-polymerizable composition. The lower and upper limits of the content of the transparent resin layer in the light control layer 23 are within the range in which the liquid crystal particles composed of a liquid crystal compound are phase-separated from the polymer of the photopolymerizable composition during the polymerization process of the photopolymerizable composition.

The transparent substrate 11 may be made of a synthetic resin or glass. The synthetic resin may be, for example, an acrylic resin or a polycarbonate-based resin.

The adhesive layer 13 may have self-adhesive properties, for example. The self-adhesive properties of the adhesive layer 13, which are the adhesive properties of the adhesive layer 13 itself, enable separation of the light control sheet 12 due to external stress applied to the transparent substrate 11, and enable re-adhesion between the light control sheet 12 and the transparent substrate 11. The adhesion derived from the self-adhesion of the adhesive layer 13 can adhere the light control sheet 12 and the transparent substrate 11 together using the own weight of the light control sheet 12 in the state in which the adhesive layer 13 is in contact with the light control sheet 12 and the transparent substrate 11, without requiring processing using heating or drying or without pressing the light control sheet 12 against the transparent substrate 11.

The sealing elements 14A and 14B and the sealing part 26 may be made, for example, of at least one material selected from the group consisting of polyacrylate-based resins, epoxy-based resins, allyl-based resins, polyurethane-based resins, and silicone-based resins.

As described above, according to an embodiment of the light control device and the method of producing a light control device, the effects described below can be achieved.
(1) Since the sealing part 14 is thick enough to separate the edge portion 13E of the adhesive layer 13 from the transparent substrate 11, the sealing part 14 can ensure the function of sealing the edge surface 21E of the first electrode film 21 and the edge surface 23E of the light control layer 23. Furthermore, since the sealing part 14 is disposed in the gap between the edge portion 13E of the adhesive layer 13 and the transparent substrate 11, the gap in question is suppressed from being visible via the transparent substrate 11.
(2) Since the sealing part 14 seals the second electrode part 22C in addition to the edge surface 21E of the first electrode film 21 and the edge surface 23E of the light control layer 23, sealing function of the sealing part 14 is enhanced.
(3) Since the sealing part seals the second electrode terminal 25 in addition to the edge surface 21E of the first electrode film 21 and the edge surface 23E of the light control layer 23, sealing function of the sealing part 14 is enhanced.
(4) Since the first sealing element 14A is thick enough to separate the edge portion 13E of the adhesive layer 13 from the transparent substrate 11, the first sealing element 14A can ensure the function of sealing the edge surface 21E of the first electrode film 21 and the edge surface 23E of the light control layer 23. Furthermore, the ionizing radiation curable resin RR filled in the gap between the edge portion 13E of the adhesive layer 13 and the transparent substrate 11 and the gap between the adhesive layer 13 and the first sealing element 14A forms the sealing part 14 together with the first sealing element 14A. Therefore, the gap between the transparent substrate 11 and the light control sheet 12 is suppressed from being visible via the transparent substrate 11.
(5) In the sealing part 14 formed due to curing of the ionizing radiation curable resin RR, the sealing part 14 is further thickened in the direction protruding from the edge surface 21E of the first electrode film 21 in the plane on which the first electrode film 21 extends. Thus, the sealing function of the sealing part 14 is further enhanced.

The embodiment described above may be modified and implemented as follows.

### [Light control sheet]

The light control sheet 12 may be of not only a normal type but may also be of a reverse type. A reverse type light control sheet has a low haze in the state in which no voltage is applied to the light control sheet, and has a higher haze in the state in which a voltage is applied to the light control sheet, compared to the case where no voltage is applied to the light control sheet.

A reverse type light control sheet may further include, for example, two vertical alignment films sandwiching the light control layer 23 in the thickness direction of the light control layer 23. The vertical alignment films are each located between the electrode layer 21B of the electrode film 21 and the light control layer 23, and between the electrode layer 22B of the electrode film 22 and the light control layer 23. The light control layer 23 may contain, for example, a liquid crystal compound with negative dielectric anisotropy.

The light control sheet 12 may have a curved shape. The outer shape of the light control sheet 12 may be a shape other than a rectangular shape. For example, the outer shape of the light control sheet 12 may be a circular shape, elliptical shape, or polygonal shape other than a rectangular shape.

### [Sealing part]

As described above, the material for forming the first sealing element 14A may be different from the material for forming the second sealing element 14B. In this case, since the first sealing element 14A can be distinct from the second sealing element 14B, the first and second sealing elements 14A and 14B can be specified as follows.

The first sealing element 14A covers the edge surface 21E of the first electrode film 21 and the edge surface 23E of the light control layer 23. In the first sealing element 14A, the height from the bonding surface 21S to the transparent substrate 11 is larger than the thickness of the adhesive layer 13. The second sealing element 14B is disposed in the gap between the edge portion 13E of the adhesive layer 13 and the transparent substrate 11, and the gap between the adhesive layer 13 and the first sealing element 14A.

### [Functional layer]

The light control sheet 12 may include various types of functional layer. The functional layer may be provided to at least one of the first electrode film 21 and the second electrode film 22. In other words, only the first electrode film 21 may have a functional layer, only the second electrode film may have a functional layer, or the first and second electrode films 21 and 22 may both have respective functional layers.

If the first electrode film 21 includes a functional layer, the functional layer may be located between the first base material 21A and the first electrode layer 21B, or may be provided to the surface of the first base material 21A facing away from the surface provided with the first electrode layer 21B. If the second electrode film 22 includes a functional layer, the functional layer may be located between the second base material 22A and the second electrode layer 22B, or may be provided to the surface of the second base material 22A facing away from the surface provided with the second electrode layer 22B.

For example, the functional layer may be at least one selected from the group consisting of a hardcoat layer, antiblocking layer, primer layer, protective layer, and index-matching layer. The light control sheet 12 may include two or more functional layers.

### [Appendixes]

According to the embodiment and modifications described above, the following technical ideas can be derived.

### [Appendix 1]

A light control device, including
a transparent substrate;
a light control sheet that includes a light control layer containing a transparent resin layer with multiple voids defined therein and a liquid crystal composition filled in the voids, the light control layer being sandwiched between a first electrode film and a second electrode film, the first electrode film having a bonding surface facing the transparent substrate; and
an adhesive layer that bonds the bonding surface to the transparent substrate, wherein
the light control sheet includes
   a first sealing element that covers an edge surface of the first electrode film and an edge surface of the light control layer, and has a height from the bonding surface to the transparent substrate, the height being larger than a thickness of the adhesive layer, and
   a second sealing element disposed in a gap between an edge portion of the adhesive layer and the transparent substrate and a gap between the adhesive layer and the first sealing element; and
a material forming the first sealing element is different from a material forming the second sealing element.

### [Appendix 2]

The light control device according to Appendix 1, wherein
the second sealing element is disposed in a gap between the first sealing element and the transparent substrate.

## Claims

1. A light control device comprising
a transparent substrate;
a light control sheet that includes a light control layer containing a transparent resin layer with multiple voids defined therein and a liquid crystal composition filled in the voids, the light control layer being sandwiched between a first electrode film and a second electrode film, the first electrode film having a bonding surface facing the transparent substrate;
an adhesive layer that bonds the bonding surface to the transparent substrate; and
a sealing part that is disposed in a gap between an edge portion of the bonding surface and the transparent substrate, and covers an edge surface of the first electrode film and an edge surface of the light control layer, wherein
the sealing part has a thickness separating an edge portion of the adhesive layer from the transparent substrate, and is disposed in a gap between the edge portion of the adhesive layer and the transparent substrate.

2. The light control device according to claim 1, wherein
the second electrode film includes an electrode part exposed from the light control layer and the first electrode film; and
the sealing part is disposed in a gap between the electrode part and the transparent substrate.

3. The light control device according to claim 2, wherein
the light control sheet further includes an electrode terminal connected to the electrode part of the second electrode film; and
the sealing part covers the electrode terminal and a portion of the electrode part exposed from the electrode terminal.

4. A method of producing a light control device, the light control device comprising
a transparent substrate;
a light control sheet that includes a light control layer containing a transparent resin layer with multiple voids defined therein and a liquid crystal composition filled in the voids, the light control layer being sandwiched between a first electrode film and a second electrode film, the first electrode film having a bonding surface facing the transparent substrate; and
an adhesive layer that bonds the bonding surface to the transparent substrate, wherein
the light control sheet includes a first sealing element covering an edge surface of the first electrode film and an edge surface of the light control layer, and has a height from the bonding surface, the height being larger than a thickness of the adhesive layer; and
the method comprises
separating an edge portion of the adhesive layer from the transparent substrate by bonding the light control sheet to the transparent substrate via the adhesive layer so that the first sealing element is brought into contact with the transparent substrate,
filling an ionizing radiation curable resin in a gap between the edge portion of the adhesive layer and the transparent substrate and a gap between the adhesive layer and the first sealing element, and
curing the ionizing radiation curable resin by applying ionizing radiation to the ionizing radiation curable resin to form a sealing part constituted of the first sealing element and the ionizing radiation curable resin.

5. The method of producing a light control device according to claim 4, wherein
filling the ionizing radiation curable resin further includes filling the ionizing radiation curable resin in a gap between the first sealing element and the transparent substrate on an opposite side to the adhesive layer with respect to the first sealing element.
